# EUROPÄISCHE PATENTSCHRIFT

(11) **EP 4 013 724 B1**
(45) Veröffentlichungstag und Bekanntmachung des Hinweises auf die Patenterteilung: **10.12.2025**
(21) Anmeldenummer: 20753761.4
(22) Anmeldetag: 11.08.2020
(51) Int. Cl.: C03C 17/38, B60J 1/00, B60J 1/18, H05B 3/84

(54) **VERMINDERUNG DER KORROSION VON SILBERDRÄHTEN AUF EINEM GLASSUBSTRAT**
REDUCTION OF CORROSION OF SILVER WIRES ON A GLASS SUBSTRATE
RÉDUCTION DE LA CORROSION DES FILS D'ARGENT SUR UN SUBSTRAT DE VERRE

(30) Priorität: 13.08.2019 EP 19191361
(43) Veröffentlichungstag der Anmeldung: 22.06.2022
(73) Patentinhaber: Saint-Gobain Sekurit France, 60150 Thourotte (FR)
(72) Erfinder: LETOCART, Philippe, 4730 Raeren (BE); JUNG, Antje, 52355 Düren (DE)
(74) Vertreter: Gebauer, Dieter Edmund
(86) Internationale Anmeldenummer: PCT/EP2020/072519
(87) Internationale Veröffentlichungsnummer: WO 2021/028440

(56) Entgegenhaltungen:
- EP-A1- 0 492 487
- WO-A1-2005/117494
- JP-A- 2012 056 251
- US-A- 3 703 445
- US-A1- 2011 174 796

## Beschreibung

Die Erfindung betrifft Maßnahmen zur Vermeidung oder Verminderung der korrosiven Verfärbung von auf Silber basierenden Drähten auf einem Glassubstrat in Fahrzeugscheiben, und insbesondere schützende Beschichtungen, die zu diesem Zweck aufgebracht werden. Die Erfindung betrifft weiterhin Fahrzeugscheiben mit entsprechenden Beschichtungen, ein Verfahren zu deren Herstellung und die Verwendung von Beschichtungsmaterialien zur Herstellung von Fahrzeugscheiben.

Heckscheiben von Kraftfahrzeugen sind heute üblicherweise mit elektrischen Heizelementen zum Beheizen der Heckscheiben ausgerüstet. Die Heckscheibenheizung eines Kraftfahrzeugs kommt insbesondere in der kalten Jahreszeit zum Einsatz, um die Heckscheibe beschlagfrei zu machen oder sie zu enteisen.

Das heute übliche Standardmodell einer Scheibenheizung besteht aus mehreren, auf der Scheibe aufgebrachten, z.B. aufgedruckten, Heizdrähten, die in der Regel horizontal auf der Scheibe aufgebracht und an ihren Enden über Sammelschienen elektrisch miteinander verbunden sind. Im Betrieb wird über diese Sammelschienen Strom geleitet, wobei durch den Widerstand der Heizdrähte Wärme erzeugt wird, mit der dann die Scheibe geheizt wird. Dieser Typ der Scheibenheizung wurde Ende der 1960er Jahre bei der Ford Motor Company entwickelt und wurde 1974 erstmals serienmäßig in Fahrzeuge verbaut. Als leitendes Material wird in diesen Heizsystemen häufig elementares Silber verwendet, das als Edelmetall die bestmögliche elektrische Leitfähigkeit aufweist und eine möglichst geringe Lichtabschattung gewährleistet. Von der Seite, auf der das Silber auf die Glasscheibe aufgebracht ist, wird das Silber als schwarz oder grau wahrgenommen, während von der anderen Seite der Glasscheibe auch ein orangener Farbeindruck entstehen kann; dies ist durch eine Wechselwirkung des Silbers und ein teilweises Eindringen des Silbers in die Glasoberfläche bedingt.

Bei einer anderen Variante der Heckscheibenheizung sind die Drähte nicht aufgedruckt, sondern befinden sich zwischen den zwei Lagen einer Verbundglasscheibe.

In der DE 10018276 A1 ist eine Verbundscheibe mit in einer thermoplastischen Klebeschicht eingebetteten, elektrisch leitfähigen Drähten offenbart, wobei die Drähte aus mindestens zwei leitfähigen Materialschichten bestehen. Bei einem ausschließlich auf die Scheibe aufgedruckten Heizsystem, bei dem die Leiterbahnen elementares Silber enthalten, kann es über einen längeren Zeitraum zu einer teilweisen und oberflächlichen Gelb- oder Braunfärbung der Heizdrähte kommen. Die oft ungleichmäßige Verfärbung der Heizleiter geht mit einem Verlust der Ästhetik der Scheibe einher. Des Weiteren kann den Nutzern der Autos das Gefühl vermittelt werden, dass die Funktion der Drähte beeinträchtigt ist. Um solche Verunsicherungen über die Funktionstüchtigkeit des Heizsystems zu vermeiden, bestand ein Bedarf für Maßnahmen mit dem eine Verfärbung der Heizdrähte in Scheibenheizungen reduziert oder ganz unterbunden werden kann.

In der US 2011/074796 A1 ist eine Heckscheibe mit Heizdrähten offenbart, welche eine Schutzfolie aufweist, welche die Heizdrähte zumindest teilweise abdeckt.

WO 2005/117494 A1 offenbart Fahrzeugheckscheiben aus Polycarbonat mit einem Heizungssystem und einer Schutzbeschichtung aus einem Silikon-Hartüberzug (Silicon hard coat).

Die vorliegende Erfindung befasst sich mit Maßnahmen und einem System, mit dem eine unerwünschte Verfärbung der Heizdrähte in Scheibenheizungen reduziert oder ganz unterbunden werden kann.

Überraschend wurde in den dieser Anmeldung zugrundeliegenden Untersuchungen gefunden, dass die erwähnte Verfärbung des Silbers in Heizdrähten von Scheibenheizungen ihre Ursache in der oberflächlichen Oxidation des Silbers findet, bei der durch Einwirkung von Schwefelwasserstoff, der in sehr geringen Mengen in der Umgebungsluft enthalten sein kann, Ag₂S gebildet wird. Das als Ag₂S gebildete Produkt ist dabei für die beobachtete Gelb- oder Braunfärbung der Drähte verantwortlich. Auf Grund dieser Erkenntnisse wird in dieser Erfindungsbeschreibung eine Beschichtung für das elementare Silber in den Heizdrähten und - leitungen einer Scheibenheizung vorgeschlagen. Eine solche Beschichtung schützt das elementare Silber in den Heizdrähten und Heizleitungen insbesondere vor unerwünschten Verfärbungen.

Gemäß einem ersten Aspekt betrifft die vorliegende Erfindung demzufolge eine Fahrzeugscheibe, mindestens umfassend ein Glassubstrat mit darauf in nicht kontinuierlicher Form aufgebrachtem elementarem Silber, wobei das elementare Silber eine Beschichtung aufweist. Die Beschichtung enthält ein Thiol und/oder ein Silikonharz und/oder ein Silikat. Bei der Beschichtung handelt es sich um eine vor Verfärbung schützende Beschichtung.

Die Angabe "in nicht-kontinuierlicher Form" bezeichnet den Umstand, dass das elementare Silber nicht vollflächig und nicht als einheitlicher Bereich auf der Scheibe aufgebracht ist, sondern so, dass sich zwischen einzelnen beschichteten Bereichen nicht-beschichtete Bereiche befinden. Das Silber ist in Form mehrerer Streifen oder Linien auf dem Glassubstrat aufgebracht, zwischen denen sich nicht-beschichtete Bereiche des Glassubstrats befinden. Die Streifen oder Linien sind an ihren Enden insbesondere durch Streifen miteinander verbunden, die z.B. als Sammelschienen ausgebildet sind. Das elementare Silber ist als mehrere Linien oder Bahnen auf dem Glassubstrat aufgebracht. Die aufgebrachten Linien werden im Rahmen der vorliegenden Anmeldung auch als Drähte bezeichnet.

Die Angabe, dass das Glassubstrat "darauf aufgebrachtes elementares Silber aufweisen" soll, ist so zu verstehen, dass das Glassubstrat in den betreffenden Bereichen eine Beschichtung aufweist, die elementares Silber enthält, aber nicht notwendigerweise nur aus diesem besteht.

Die Angabe "aufgebracht" umfasst in der hier beschriebenen Erfindung eine Applikation des Silbers mit Hilfe von für den Fachmann ohne Weiteres bekannten Verfahren, einschließlich Druckverfahren wie Siebdruck, Inkjetdruck, Aerosoldruck, Gravurdruck oder Flexodruck, aber auch Verfahren, mit denen das Silber als extrudierte Paste auf das Substrat gedruckt wird.

Die Angabe "wobei das elementare Silber eine Beschichtung aufweist" ist so zu verstehen, dass mindestens auf das als mehrere Linien oder Bahnen aufgebrachte elementare Silber eine Beschichtung aufgebracht ist, d.h. dass mindestens das als mehrere Linien oder Bahnen aufgebrachte elementare Silber mit einer Beschichtung bedeckt ist.

Die Angabe, dass die "Fahrzeugscheibe mindestens ein Glassubstrat umfasst" ist insbesondere so zu verstehen, dass die Fahrzeugscheibe als eine Einzelscheibe aus einem Glassubstrat ausgebildet ist. Alternativ kann die Fahrzeugscheibe als ein Verbundglas aus einem Glassubstrat und einer weiteren Glasscheibe, die über eine thermoplastische Zwischenschicht miteinander verbunden sind, ausgebildet sein.

Bevorzugt weist die Fahrzeugscheibe die Form einer Heckscheibe auf. Weiterhin ist es bevorzugt, dass es sich bei dem Glas, das das Glassubstrat bildet, um ein wärmebehandeltes und bevorzugt um ein getempertes Glas handelt. Derartige Gläser sind beispielsweise unter der Handelsbezeichnung Sekurit von Saint-Gobain erhältlich und werden durch Abschrecken einer auf etwa 600°C erhitzten Scheibe mit einem kalten Luftstrom hergestellt. Dabei entstehen in der Oberfläche starke Druckspannungen, die die Biegefestigkeit und unter anderem die Temperaturwechselbeständigkeit des Glases bedeutend erhöhen.

Das Glassubstrat besteht bevorzugt aus Kalk-Natron-Glas, wie es für Fensterscheiben üblich ist, kann aber auch andere Glassorten enthalten, wie Borosilikatglas, Aluminosilikatglas oder Quarzglas. Die Dicke des Glassubstrats beträgt typischerweise von 0,5 mm bis 10 mm, bevorzugt 1 mm bis 5 mm.

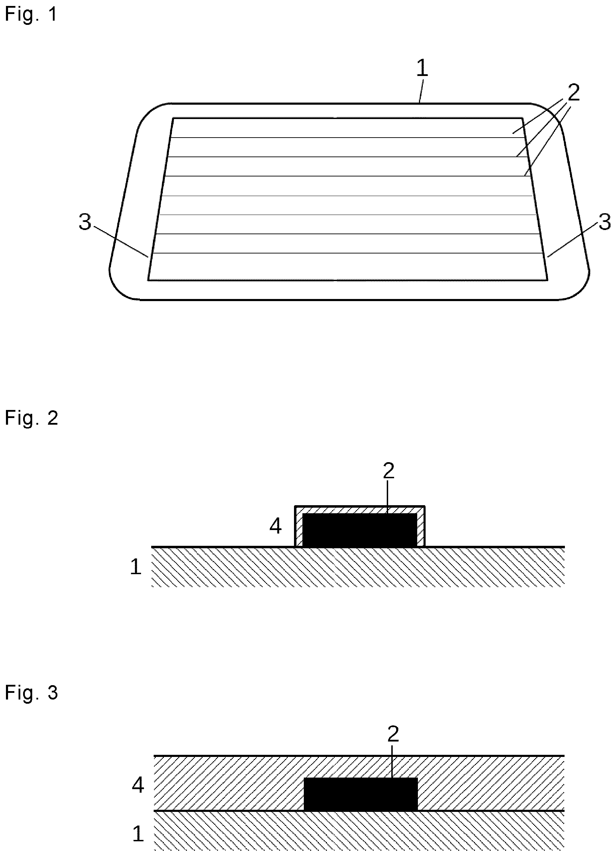

Das auf das Glassubstrat der Fahrzeugscheibe aufgebrachte elementare Silber ist als eine Mehrzahl von Linien aufgebracht, die an ihren Enden miteinander verbunden sind. Eine derartige Konfiguration des aufgebrachten Silbers, wie sie in Fig. 1 dargestellt ist, ist eine Voraussetzung für die Einbindung der Fahrzeugscheibe in eine Heizvorrichtung, mit der die Fahrzeugscheibe beheizt werden kann. Die Mehrzahl der auf das Glassubstrat der Fahrzeugscheibe aufgebrachten Linien bildet einen Teil eines Heizsystems. Derartige Heizsysteme weisen in der Regel zusätzlich zu den Linien Verbindungelemente für die Linien auf, mit denen die einzelnen Linien mit einer Stromquelle verbunden werden können, sowie ein Steuerungselement, mit dem die Verbindung zu der Stromquelle aktiviert oder deaktiviert werden kann.

Die Angabe "Linien" wird in der vorliegenden Erfindung synonym zu "Bahnen" verwendet, und bezeichnet eine Struktur, die sich in ihrer Länge wesentlich weiter erstreckt als in ihrer Breite und Dicke, d.h. die Länge der Struktur ist bevorzugt mindestens um den Faktor 100 und besonders bevorzugt mindestens um den Faktor 250 größer als die Breite und Dicke der Struktur.

Bei der "Mehrzahl" handelt es sich bevorzugt um mindestens 3 und insbesondere mindestens 5 Linien und/oder bevorzugt höchstens 20 und insbesondere höchstens 15 Linien.

Das Glassubstrat der Fahrzeugscheibe weist eine Mehrzahl von Linien auf und die von den Linien bedeckte Fläche sollte möglichst gering sein, d.h. vorzugsweise sollten nicht mehr als 5% und insbesondere nicht mehr als 2% der gesamten Fläche des Glassubstrats von den Linien bedeckt sein. Andererseits sollten die Linien möglichst homogen über die gesamte Fläche des Glassubstrats verteilt sein, z.B. in der Form, dass die Linien, inklusive der sich zwischen den Linien befindlichen Fläche des Glassubstrats, einen Gesamtanteil des Glassubstrats von mindestens 60%, bevorzugt mindestens 70% und besonders bevorzugt mindestens 80% bedecken.

Hinsichtlich der Dicke der Linien unterliegt die vorliegende Erfindung keinen relevanten Beschränkungen, wobei die Dicke jedoch möglichst dünn sein sollte, damit sie vom Nutzer nicht als störend und das Blickfeld einschränkend empfunden wird, andererseits sollten die Linien jedoch auch ausreichend dick sein, damit die Funktion der Linien als Heizdrähte nicht beeinträchtigt wird. Als geeignet für die Dicke der Linien kann ein Bereich von 1 bis 200 µm (Mikrometer), insbesondere 5 bis 100 µm und ganz besonders bevorzugt im Bereich von etwa 20 bis 50 µm angegeben werden. In besonderen bevorzugten Fällen kann zudem eine Dicke im Bereich von 10 bis 20 µm realisiert werden.

Die Breite der Linien unterliegt ebenfalls keinen relevanten Beschränkungen, wobei auch hier eine möglichst geringe Breite bevorzugt ist, um das Sichtfeld nicht störend und mehr als nötig einzuschränken. Bevorzugt sind die Linien 10 µm bis 1 cm und weiter bevorzugt 100 µm bis 2 mm breit. Bevorzugt ist im Rahmen der Erfindung, dass die Beschichtung selbst den optischen Eindruck des auf dem Glassubstrat befindlichen elementaren Silbers nicht verändert. Demzufolge sind gefärbte Beschichtungen im Rahmen der vorliegenden Erfindung bevorzugt ausgeschlossen.

Ein geeignetes Beschichtungsmittel ist ein Beschichtungsmittel, das ein Thiol enthält. Durch solche Thiole können Silberoberflächen effektiv passiviert werden. Dadurch kann es zu einem Farbeindruck kommen, der sich zwar vom Farbeindruck des Silbers vor der Behandlung mit Thiolen unterscheidet, dieser Farbeindruck ist jedoch dann gleichmäßig/homogen, beständig und verändert sich über die weitere Verwendungszeit des beschichteten Substrats nicht mehr. Thiole haben weiterhin den Vorteil, dass sie aufgrund der Ag-S-Wechselwirkung selektiv nur auf der Silberoberfläche adsorbiert werden.

Eine geeignete Klasse von Thiolen, die sich gut verarbeiten lässt, sind z.B. Thiocarbonsäuren, die in wässriger Emulsion appliziert werden und gut auf der Silberoberfläche haften. Thiocarbonsäuren haben den Vorteil, dass sie als wässrige Emulsion ohne Emulgator formuliert werden können, weil die Thiocarbonsäuren eine hydrophile Carboxylgruppe haben, durch die sie teilweise sogar wasserlöslich sind. Andererseits haben wässrige Emulsionen von Thiocarbonsäuren nur eine geringe Standzeit und ihre Handhabung ist schwierig.

Eine weitere Klasse von geeigneten Thiolen sind längerkettige (d.h. mit mindestens 6 C- Atomen) hydrophobe Thiole oder deren Veresterungsprodukte ohne hydrophile Carboxylgruppen. Derartige Thiole weisen den Vorteil nicht nur einer adäquaten Schutzwirkung gegenüber oxidativen Verfärbungen auf, sondern können auch als wässrige Emulsion angewendet werden. Diese Art der Applikation ist beispielweise in der EP 0492487 B1 im Detail beschrieben.

Besonders bevorzugt sind dabei hydrophobe aliphatische Thioverbindung mit mindestens 12 C-Atomen in der Kette, und ganz besonders bevorzugt hydrophobe aliphatische Thioverbindung mit höchstens 20 C-Atomen in der Kette. Bei weniger als 12 C-Atomen kann in Einzelfällen kein gut haftender Schutzüberzug erzielbar sein oder es tritt eine starke Geruchsbelästigung auf. Hydrophobe aliphatische Thioverbindungen mit mehr als 20 C-Atomen sind hingegen in ihrer Konsistenz derart fest und können zum Teil nicht als Emulsion ohne organische Lösungsmittel verarbeitet werden, was die Applikation der Thiole technisch erschwert. Eine in diesem Zusammenhang ganz besonders bevorzugte hydrophobe aliphatische Thioverbindung ist Hexadecanthiol.

Die vorstehend angegebenen Thiole sind insbesondere vorteilhaft, weil sie sich sehr fein und langzeitstabil emulgieren lassen und in dünner, aber dichter Schicht, auf die zu schützenden Oberflächen aufgetragen werden können. Hierzu können ggf. Emulgatoren, wie insbesondere verzweigte Fettalkohole mit 9 bis 20 C-Atomen, bevorzugt mit 10 bis 15 C-Atomen, zugesetzt werden, wobei die verzweigten Fettalkohole vorzugsweise alkoxyliert, insbesondere ethoxyliert, sind und einen Alkoxylierungsgrad von 2 bis 10 aufweisen.

Für die thiolbasierten Beschichtungsmittel ist ein pH-Wert von 1-10 zweckmäßig, ein pH- Wert von 1-8 bevorzugt, und ein pH-Wert von 2-4 besonders bevorzugt, da bei diesem pH-Wert der Emulgator aus der abgeschiedenen Thiolschicht weitgehend vollständig mit Wasser ausgewaschen werden kann; dies ist für einen zuverlässigen Oberflächenschutz wichtig. Übersteigt der pH-Wert den angegebenen Wertebereich wird weniger Inhibitor ausgewaschen, wodurch die Schutzwirkung und die Schmierwirkung verstärkt werden, aber auch Flecken auf der Oberfläche auftreten können, die das Aussehen stören. Bei einem pH-Wert über 10 besteht die Gefahr einer Spaltung der Emulsion.

Da Thiole selektiv mit Silber reagieren, wird in der Regel bei einer Thiolbehandlung etwa eine Moleküllage von Thiolen auf der Silberoberfläche abgeschieden. Die Schichtdicke der Thiolbeschichtung wird daher in der Regel von der Kettenlänge des Thiols bestimmt und liegt in aller Regel bei weniger als 1 µm.

Zur Fixierung der Thiole auf dem Silber ist es möglich, die Beschichtung mit einem weiteren Mittel zu überschichten, das z.B. eine bessere Resistenz gegenüber mechanischer Einwirkung (Verkratzen) vermittelt und/oder ein Auswaschen der Thiole unterdrückt oder unterbindet.

Ein weiteres geeignetes Beschichtungsmittel, das farblos ist und das eine günstige Schutzwirkung des elementaren Silbers gegenüber oxidativen Verfärbungen vermittelt, ist ein Beschichtungsmittel, dass ein Silikonharz enthält. Silikonharze weisen zudem den Vorteil auf, dass sie günstige Eigenschaften gegenüber Abreibung, chemische Agenzien oder UV-Strahlung vermitteln. Geeignete Silikonharze können beispielsweise alkylierte Silikonharze wie diejenigen sein, die als BECKOLITE M-6652-60 oder M-6650-60 (jeweils von Dainippon Ink and Chemicals Co., Ltd.), Baysilone Resin UD-460M oder 180 (jeweils von Bayer Co., Ltd.) erhältlich sind.

Eine weitere geeignete Klasse von Silikonharzen sind Silikonharze, wie sie in der JP 2012-056251 A beschrieben sind.

Eine weitere geeignete Klasse von Silikonharzen zur Unterdrückung von oxidativer Verfärbung von elementarem Silber sind Siloxan-Acrylcopolymere, wie sie in der JPH- 09/241532 A beschrieben sind.

Eine weitere geeignete Klasse von Silikonharzen zur Unterdrückung von oxidativer Verfärbung von elementarem Silber ist z.B. in der WO 1999/062646 A1 beschrieben. Derartige Silikonharze umfassen als eine Hauptkomponente mindestens einen Harztyp, ausgewählt aus der Gruppe bestehend aus einem Silikonacrylharz, einem Silikonalkydharz und einem multifunktionellen vernetzten Silikonharz, wobei das multifunktionelle vernetzte Silikonharz eine durchschnittliche Zusammensetzungsformel der Formel RₙSiO_{(4-n)/2} und ein zahlenmittleres Molekulargewicht von 500-1000 aufweist. In der Formel steht R für ein Wasserstoffatom, eine Niedrigalkylgruppe (C1-C6), eine Phenylgruppe oder eine substituierte Phenylgruppe; n ist eine Zahl von 1,2 bis 1,4.

Silikonharze können so auf das Glassubstrat der Fahrzeugscheibe aufgebracht sein, dass nur das auf dem Glassubstrat befindliche Silber von dem Silikonharz bedeckt ist, es ist aber auch möglich, dass das Silikonharz mehr als das auf dem Glassubstrat befindliche Silber bedeckt (d.h. z.B. eine Fläche bedeckt, die um 50% oder 100% über die vom Silber bedeckte Fläche hinausgeht; bei einem linienförmig auf dem Glassubstrat aufgebrachten Silber ist die Beschichtung um z.B. 50% oder 100% breiter als die Breite der Linie). Ebenso ist es möglich, dass das Silikonharz die gesamte Fläche des Glassubstrats bedeckt.

Für eine Beschichtungszusammensetzung auf Basis von Silikonharzen kann es vorteilhaft sein, wenn die Beschichtungszusammensetzung zusätzlich zu dem Silikonharz eine Metallverbindung, bevorzugt in einem Anteil von 0,01 bis 5 Gewichtsteilen enthält. Eine besonders geeignete Metallverbindung ist beispielsweise ein Zinksalz oder ein Zinkkomplex. Bevorzugte Zinksalze umfassen insbesondere Zinksalze von Carbonsäuren mit 3 bis 20 Kohlenstoffatomen und Phosphorsäurezinksalze, besonders bevorzugte Zinksalze sind Zinksalze von aliphatischen gesättigten oder ungesättigten Carbonsäuren wie insbesondere 2-Ethylhexylcarbonsäure, Neodecancarbonsäure, Laurinsäure, Ricinoleinsäure, Stearinsäure oder Undecylencarbonsäure. Besonders geeignete Phosphorsäurezinksalze sind Phosphorsäureesterzinksalze. Besonders geeignete Zinkkomplexe sind Zinkkomplexe mit Carbonylverbindungen wie Acetylacetonat.

Es wird angenommen, dass im Fall einer derartige Salze oder Komplexe enthaltenden Beschichtungszusammensetzung gegebenenfalls in die Beschichtung eindringender Schwefelwasserstoff durch die Salze oder Komplexe absorbiert wird, wodurch diese in Zinksulfid umgewandelt werden. Dadurch kann der Schwefelwasserstoff nicht mehr bis zu dem elementaren Silber unter der Beschichtung durchdringen.

Alternativ oder zusätzlich dazu kann die Beschichtungszusammensetzung auch Zirkoniumsalze oder Komplexe enthalten, insbesondere Zirkoniumkomplexe von Carbonsäuren, bevorzugt von niederen Carbonsäuren (C1 bis C10, insbesondere C2 bis C6), die mit einer Benzoyl- oder Methylbenzolgruppe substituiert sein können. Als besonders geeignet sind in diesem Zusammenhang Zirkoniumkomplexe der 4-Methyl-y-oxo-benzol-butansäure oder der p-Toluoyl-propansäure zu nennen.

Gegebenenfalls kann die Silikonzusammensetzung darüber hinaus übliche Additive, wie insbesondere Kondensationskatalysatoren für das Silikonharz, Lösungsmittel, Glättungsmittel, Kopplungsmittel, schaumunterdrückende Mittel, Mattierungsmittel, UV-Absorbierungsmittel, Antioxidationsmittel und dergleichen enthalten, die dem Fachmann für entsprechende Formulierungen bekannt sind.

Als geeignete Dicke für eine Silikonbeschichtung kann ein Bereich von etwa 1 bis 150 µm, bevorzugt 5 bis 100 µm und besonders bevorzugt 8 bis 50 µm angegeben werden.

Die vorstehend beschriebenen Beschichtungszusammensetzungen können mittels üblicher Beschichtungsverfahren, wie Tauch- oder Spraybeschichtung oder Gasphasenbeschichtung, auf das Glassubstrat aufgebracht werden. Bei der Beschichtung mit Thiolen kann anschließend nicht gebundenes Thiol vom Substrat abgewaschen werden. Ein weiteres geeignetes Beschichtungsmittel ist Silikat (SiOₓ mit x ~ 2). Eine solche Beschichtung kann z.B. unter Verwendung eines flüchtigen Silanvorläufers erzeugt werden, der in einer Flamme unter Bildung von Silikat verbrannt wird, wobei sich das Silikat aus der Flamme direkt auf dem zu beschichtenden Material absetzt. Vorrichtungen zum Aufbringen solcher Silikatbeschichtungen sind beispielsweis von der Firma Arcotech unter der Bezeichnung FTM erhältlich. Bei einer Silikatbeschichtung ist ein sehr dünner Auftrag der Beschichtung in der Regel ausreichend, wobei eine Schichtdicke von etwa 10 bis 50 nm und insbesondere 15 bis 30 nm als geeignet angegeben werden kann.

Die Erfindung betriff eine Fahrzeugscheibe, die ein Heizsystem umfasst, das aus einer Mehrzahl von Drähten gebildet ist, die elementares Silber umfassen, wobei die Drähte mit einer Beschichtung bedeckt sind, welche ein Thiol und/oder ein Silikonharz und/oder Silikat enthält, wie sie vorstehendend im Detail beschrieben sind. Ganz besonders bevorzugt sind Beschichtungen, die nur eine dieser genannten Alternativen enthalten.

Die Fahrzeugscheibe kann so ausgestaltet sein, dass sich die Drähte auf einer von außen zugänglichen Fläche des als eine Glasscheibe ausgebildeten Glassubstrats befinden. Es ist aber auch möglich, dass die Drähte auf einem Glassubstrat als Teil einer Verbundglasscheibe angebracht sind, sodass sich über und unter den Drähten Glasscheiben befinden. Da eine solche Konstruktion jedoch in der Regel deutlich aufwändiger herzustellen ist und das Problem von möglichen Verfärbungen der Drähte in Wechselwirkung mit Bestandteilen der Umgebungsluft bei Verbundglasscheiben weniger stark zum Tragen kommt, ist es bevorzugt, wenn die Fahrzeugscheibe Drähte auf einer von außen zugänglichen Fläche der Glasscheibe aufweist, die mit den vorstehend angegebenen Materialien beschichtet sind. Unter einer von außen zugänglichen Fläche der Glasscheibe ist in diesem Zusammenhang eine dem Fahrzeuginnenraum oder der äußeren Umgebung unmittelbar benachbarte Fläche zu verstehen.

Gemäß einem weiteren Aspekt betrifft die vorliegende Erfindung ein Verfahren zur Herstellung einer Fahrzeugscheibe, das die folgenden Schritte umfasst:
- Bereitstellen eines Glassubstrats, das ein darauf aufgebrachtes Heizsystem aufweist, das aus einer Mehrzahl von Drähten gebildet ist, die elementares Silber enthalten,
- Aufbringen einer Beschichtung, die ein Thiol und/oder ein Silikonharz und/oder Silikat umfasst, auf die Mehrzahl der Drähte, und
- gegebenenfalls Härten der Beschichtung.

Das Aufbringen kann zweckmäßig durch Aufsprühen der Beschichtung oder Eintauchen in eine Lösung, die die Beschichtung enthält, durch Gasphasenbeschichtung oder durch Aufbringen von Silikat durch Verbrennung eines geeigneten flüchtigen Vorläufers, wie vorstehend erläutert, erfolgen. Die Beschichtungszusammensetzung, die aufgebracht wird, umfasst Thiol und/oder ein Silikonharz und/oder Silikat und besonders bevorzugt ein im vorstehenden als besonders geeignet angegebenes Thiol und/oder ein Silikonharz und/oder Silikat. Besonders bevorzugt umfasst die Beschichtungszusammensetzung nur eine der genannten Alternativen.

Das Glassubstrat im beschriebenen Verfahren ist zweckmäßig als Fahrzeugscheibe oder als Vorläufer einer Fahrzeugscheibe ausgebildet, aus der durch Zurichtung eine Fahrzeugscheibe hergestellt werden kann. Hierfür erforderliche Schritte, z.B. ein Härten, Formen oder Biegen, kann, sofern dies die aufgebrachte Beschichtung nicht beeinträchtigt, auch mit dem beschichteten Glassubstrat durchgeführt werden. Hierbei sind insbesondere Silikat-beschichtete Glassubstrate verwendbar, in denen die Beschichtung die erforderliche thermische Stabilität aufweist.

Ein weiterer Aspekt der vorliegenden Erfindung betrifft schließlich die Verwendung einer Zusammensetzung umfassend ein Thiol und/oder ein Silikonharz für die Herstellung einer Fahrzeugscheibe, die ein Heizsystem umfasst, das aus einer Mehrzahl von Drähten umfassend elementares Silber gebildet ist, wobei die Zusammensetzung als schützende Beschichtung auf die Drähte aufgebracht wird. Im Rahmen dieser Verwendung wird die Beschichtung als vor Verfärbung schützende Beschichtung aufgebracht. Ein analoger Aspekt betrifft die Verwendung einer Zusammensetzung umfassend einen Silikatvorläufer für die Herstellung einer Fahrzeugscheibe, die ein Heizsystem umfasst, das aus einer Mehrzahl von Drähten umfassend elementares Silber gebildet ist, wobei aus der Zusammensetzung durch Verbrennung Silikat erzeugt wird, das als schützende Beschichtung auf die Drähte aufgebracht wird.

Die Erfindung wird anhand von Figuren und Ausführungsbeispielen näher erläutert. Die Zeichnungen sind schematische Darstellungen und nicht maßstabsgetreu. Die Figuren schränken die Erfindung in keiner Weise ein. Es zeigen:
- Fig. 1: eine schematische Ansicht einer als Heckscheibe ausgebildeten Fahrzeugscheibe umfassend ein Glassubstrat 1 mit mehreren darauf aufgebrachten Drähten aus elementarem Silber 2, die an ihren Enden über gemeinsame Sammelschienen 3 miteinander verbunden sind. Erfindungsgemäß sind mindestens die Drähte mit einer Beschichtung versehen.
- Fig. 2: eine schematische Ansicht eines Querschnitts von einem Draht aus elementarem Silber 2 mit einer Oberflächenbeschichtung 4 aus Thiolen auf einem Glassubstrat 1. Bei dem Draht handelt es sich beispielsweise um einen Heizdraht.
- Fig. 3: eine schematische Ansicht eines Querschnitts von einem Draht aus elementarem Silber 2 mit einer Oberflächenbeschichtung 4 aus Silikon auf einem Glassubstrat 1, wobei die gesamte Oberfläche des Glassubstrats 1 mit dem Silikon bedeckt ist. Bei dem Draht handelt es sich um einen Heizdraht.

## Patentansprüche

1. Fahrzeugscheibe mindestens umfassend ein Glassubstrat (1) mit darauf in nicht kontinuierlicher Form als mehrere Linien aufgebrachtem elementarem Silber (2),
wobei die Mehrzahl von Linien an ihren Enden miteinander verbunden sind, wobei die Mehrzahl der Linien einen Teil eines Heizsystems bildet, und
wobei das elementare Silber eine Beschichtung (4) aufweist, welche ein Thiol und/oder ein Silikonharz und/oder ein Silikat enthält.

2. Fahrzeugscheibe nach Anspruch 1, die die Form einer Heckscheibe aufweist.

3. Fahrzeugscheibe nach einem der Ansprüche 1 oder 2, bei welcher die Beschichtung (4) ein Thiol, insbesondere ein aliphatisches C12 bis C20 Thiol, enthält.

4. Fahrzeugscheibe nach einem der Ansprüche 1 bis 3, bei welcher die Beschichtung (4) ein Silikonharz, insbesondere ein alkyliertes Silikonharz, enthält.

5. Fahrzeugscheibe nach Anspruch 4, wobei die Beschichtung (4) zusätzlich ein oder mehrere von einem Zinksalz, einem Zinkkomplex, einem Zirkoniumsalz und einem Zirkoniumkomplex enthält.

6. Fahrzeugscheibe nach einem der Ansprüche 1 oder 2, bei welcher die Beschichtung (4) Silikat enthält und bevorzugt aus Silikat besteht.

7. Fahrzeugscheibe nach der Ansprüche 1 bis 6, bei welcher das Glassubstrat (1) ein wärmebehandeltes und bevorzugt ein getempertes Glas ist.

8. Fahrzeugscheibe nach einem der Ansprüche 1 bis 7, bei welcher die Beschichtung (4) nur auf dem elementaren Silber aufgebracht ist.

9. Fahrzeugscheibe nach einem der Ansprüche 1 bis 7, bei welcher die Beschichtung (4) im Wesentlichen vollflächig auf der Fahrzeugscheibe aufgebracht ist.

10. Verfahren zur Herstellung einer Fahrzeugscheibe nach einem der Ansprüche 1 bis 9, umfassend
- Bereitstellen eines Glassubstrats (1), das ein darauf aufgebrachtes Heizsystem aufweist, das aus einer Mehrzahl von Drähten gebildet ist, die elementares Silber (2) enthalten,
- Aufbringen einer Beschichtung (4), die ein Thiol und/oder ein Silikonharz und/oder Silikat umfasst, auf die Mehrzahl der Drähte, und
- gegebenenfalls Härten der Beschichtung (4).

11. Verwendung einer Zusammensetzung umfassend ein Thiol und/oder ein Silikonharz für die Herstellung einer Fahrzeugscheibe, die ein Heizsystem umfasst, das aus einer Mehrzahl von Drähten umfassend elementares Silber (2) gebildet ist, wobei die Zusammensetzung als vor Verfärbung schützende Beschichtung (4) auf die Drähte aufgebracht wird.

12. Verwendung einer Zusammensetzung umfassend einen Silikatvorläufer für die Herstellung einer Fahrzeugscheibe, die ein Heizsystem umfasst, das aus einer Mehrzahl von Drähten umfassend elementares Silber (2) gebildet ist, wobei aus der Zusammensetzung durch Verbrennung Silikat erzeugt wird, das als Beschichtung (4) auf die Drähte aufgebracht wird.

## Claims

1. Vehicle pane at least comprising a glass substrate (1) with elemental silver (2) applied thereon discontinuously as a plurality of lines,
wherein the plurality of lines are connected to one another at their ends, wherein the plurality of lines form part of a heating system, and
wherein the elemental silver has a coating (4) that contains a thiol and/or a silicone resin and/or a silicate.

2. Vehicle pane according to claim 1, having the form of a rear window.

3. Vehicle pane according to one of claims 1 or 2, wherein the coating (4) contains a thiol, in particular an aliphatic C12 to C20 thiol.

4. Vehicle pane according to one of claims 1 through 3, wherein the coating (4) contains a silicone resin, in particular an alkylated silicone resin.

5. Vehicle pane according to claim 4, wherein the coating (4) additionally contains one or more of a zinc salt, a zinc complex, a zirconium salt, and a zirconium complex.

6. Vehicle pane according to one of claims 1 or 2, wherein the coating (4) contains silicate and preferably is made of silicate.

7. Vehicle pane according to one of claims 1 through 6, wherein the glass substrate (1) is a heat-treated and preferably a tempered glass.

8. Vehicle pane according to one of claims 1 through 7, wherein the coating (4) is applied only on the elemental silver.

9. Vehicle pane according to one of claims 1 through 7, wherein the coating (4) is applied substantially over the entire surface of the vehicle pane.

10. Method for producing a vehicle pane according to one of claims 1 through 9, comprising
- providing a glass substrate (1) that has a heating system applied thereon formed from a plurality of wires that contain elemental silver (2),
- applying a coating (4) that comprises a thiol and/or a silicone resin and/or silicate on the plurality of wires, and
- optionally, curing the coating (4).

11. Use of a composition comprising a thiol and/or a silicone resin for the production of a vehicle pane that includes a heating system formed from a plurality of wires comprising elemental silver (2), wherein the composition is applied on the wires as a protective coating against discoloration (4).

12. Use of a composition comprising a silicate precursor for the production of a vehicle pane that includes a heating system formed from a plurality of wires comprising elemental silver (2), wherein silicate that is applied on the wires as a coating (4) is produced from the composition by combustion.

## Revendications

1. Vitrage de véhicule comprenant au moins un substrat en verre (1) sur lequel est appliqué de l'argent élémentaire (2) de manière discontinue sous la forme d'une pluralité de lignes,
dans lequel la pluralité de lignes sont reliées les unes aux autres à leurs extrémités, dans lequel la pluralité de lignes font partie d'un système de chauffage, et
dans lequel l'argent élémentaire comporte un revêtement (4) qui contient un thiol et/ou une résine de silicone et/ou un silicate.

2. Vitrage de véhicule selon la revendication 1, ayant la forme d'une lunette arrière.

3. Vitrage de véhicule selon l'une des revendications 1 ou 2, dans lequel le revêtement (4) contient un thiol, en particulier un thiol aliphatique en C12 à C20.

4. Vitrage de véhicule selon l'une des revendications 1 à 3, dans lequel le revêtement (4) contient une résine de silicone, en particulier une résine de silicone alkylée.

5. Vitrage de véhicule selon la revendication 4, dans lequel le revêtement (4) contient en outre un ou plusieurs des composés suivants : un sel de zinc, un complexe de zinc, un sel de zirconium et un complexe de zirconium.

6. Vitrage de véhicule selon l'une des revendications 1 ou 2, dans laquelle le revêtement (4) contient du silicate et est de préférence constitué de silicate.

7. Vitrage de véhicule selon l'une des revendications 1 à 6, dans laquelle le substrat en verre (1) est un verre traité thermiquement et de préférence un verre trempé.

8. Vitrage pour véhicule selon l'une des revendications 1 à 7, dans lequel le revêtement (4) est appliqué uniquement sur l'argent élémentaire.

9. Vitrage pour véhicule selon l'une des revendications 1 à 7, dans lequel le revêtement (4) est appliqué sur pratiquement toute la surface du vitrage pour véhicule.

10. Procédé de fabrication d'un vitrage de véhicule selon l'une des revendications 1 à 9, comprenant
- la fourniture d'un substrat en verre (1) sur lequel est appliqué un système de chauffage formé d'une pluralité de fils contenant de l'argent élémentaire (2),
- l'application d'un revêtement (4) comprenant un thiol et/ou une résine de silicone et/ou un silicate sur la pluralité de fils, et
- éventuellement, le durcissement du revêtement (4).

11. Utilisation d'une composition comprenant un thiol et/ou une résine silicone pour la fabrication d'un vitrage de véhicule qui comprend un système de chauffage formé d'une pluralité de fils comprenant de l'argent élémentaire (2), dans laquelle la composition est appliquée sur les fils en tant que revêtement protecteur contre la décoloration (4).

12. Utilisation d'une composition comprenant un précurseur de silicate pour la production d'un vitrage de véhicule qui comprend un système de chauffage formé d'une pluralité de fils comprenant de l'argent élémentaire (2), dans laquelle le silicate qui est appliqué sur les fils sous forme de revêtement (4) est produit à partir de la composition par combustion.
